# EUROPEAN PATENT APPLICATION

(11) **EP 4 770 278 A1**
(43) Date of publication of application: **01.07.2026**
(21) Application number: 25180620.4
(22) Date of filing: 04.06.2025
(51) Int. Cl.: H05B 47/185, H05B 47/175

(54) **SINGLE LIVE WIRE INTELLIGENT REMOTE-CONTROL METHOD, DEVICE AND SYSTEM USING THE SAME**

(30) Priority: 25.06.2024 US 202418753402
(71) Applicant: Champ-ray Industrial Co., Ltd, Taichung 43445 (TW)
(72) Inventor: CHANG, Chin Hsiung, 43445 TAICHUNG (TW)
(74) Representative: Metida

(57) **Abstract**

A single live wire intelligent remote-control device and method control at least one ceiling/wall device. It comprises a live wire providing AC voltage, a wall-mounted control panel with terminals connected to the live wire, and a power electrical wire with terminals - one connected to the control panel and one to the ceiling/wall device's input terminal. The wall-mounted control detects the AC voltage and controls the voltage phase of a second AC voltage provided to the power wire based on user input data, where different off phase periods correspond to different logic values and null of the data. The ceiling/wall device determines if the received second AC voltage is the data or not by detecting the null periods. The second input terminal of the ceiling/wall device connects to a neutral wire.

## Description

### BACKGROUND OF THE INVENTION

### Field of the Invention

The present invention relates to the technology of control method of an electrical appliance, more particularly, the present invention relates to a single live wire intelligent remote-control method, a single live wire intelligent remote-control device and a system using the same.

### Description of the Related Art

Modern architectural and interior space designs are no longer solely focused on aesthetic and functional considerations; energy efficiency and intelligent control systems have become increasingly important. Take ceiling fan controls as an example. Traditional wall-mounted control panels mostly adopt a key command output approach, where each key press corresponds to a change in the fan's operating state or speed level. However, this control method has a significant drawback: when one control panel is connected to multiple fans, the operating states of each fan may differ, resulting in a lack of synchronization.

To address this issue, existing products typically employ a one-to-one design, where one control panel is connected to only one fan or light fixture. Nevertheless, this approach faces certain limitations in practical application scenarios. For instance, in large public spaces, due to the open nature of the area and zoning requirements, there may be times when multiple fans or groups of light fixtures need to be centrally controlled from a single location to achieve environmental uniformity and synchronization within the zone. The traditional one-to-one design approach falls short in such situations. Consequently, new solutions that support one-to-many control have to be developed, aiming to meet the multiple demands of large venues for energy efficiency, intelligent control, and centralized management, thereby enhancing user convenience and improving management efficiency.

### BRIEF SUMMARY OF THE INVENTION

An object of the present invention is to provide a single live wire wall remote-control method, a single live wire intelligent remote-control device and a system using the same, so as to support one-to-many synchronous control to meet the multiple demands of large venues for energy efficiency, intelligent control, and centralized management, thereby enhancing user convenience and improving management efficiency.

In view of this, the embodiment of the present invention provides a single live wire intelligent remote-control system. The single live wire intelligent remote-control system includes a single live wire intelligent remote-control device and at least a ceiling/wall device. The single live wire intelligent remote-control device includes a wall-mounted control, and a power electrical wire. A control panel of the wall-mounted control mounted on a wall, and the wall-mounted control includes a first terminal and a second terminal, wherein the first terminal of the wall-mounted control is coupled to the live wire to receive an AC voltage. The power electrical wire includes a first terminal and a second terminal, wherein the first terminal of the power electrical wire is coupled to the second terminal of the wall-mounted control, wherein the power electrical wire is installed in wall. The ceiling/wall device includes a first input terminal and a second input terminal, wherein the first input terminal of the ceiling/wall device is coupled to the second terminal of the power electrical wire, the second input terminal of the ceiling/wall device is coupled to a neutral wire. The wall-mounted control detects the AC voltage and controls a voltage phase of a second AC voltage provided to the power electrical wire according to a transmission data by user control on the control panel, wherein a first off phase period of the voltage phase corresponds to a first logic of the transmission data and a second off phase period of the voltage phase corresponds to a second logic of the transmission data, and a third off phase period of the voltage phase corresponds to a null of the transmission data, wherein the ceiling/wall device determines whether the receives second AC voltage is the transmission data or not according to a receiving of null.

In the single live wire intelligent remote-control device and system according to a preferred embodiment of the present invention, the wall-mounted control includes a DC power converter, a first zero-crossing detection circuit, a second zero-crossing detection circuit, a first microcontroller unit and a switching control module. The DC power converter is coupled between the first terminal of the wall-mounted control and the second terminal of the wall-mounted control, for providing a DC power voltage. The first zero-crossing detection circuit includes a first terminal and a second terminal, wherein the first terminal of the first zero-crossing detection circuit is coupled to the first terminal of the wall-mounted control for detecting the AC voltage and outputting a first zero-crossing signal. The second zero-crossing detection circuit includes a first terminal and a second terminal, wherein the first terminal of the second zero-crossing detection circuit is coupled to the second terminal of the wall-mounted control for detecting the second AC voltage and outputting a second zero-crossing signal. The first microcontroller unit is coupled to the DC power converter, the first zero-crossing detection circuit, the second zero-crossing detection circuit and the control panel, generating the transmission data according to an operation of the control panel by user. The switching control module is coupled to the first microcontroller unit, the first terminal of the wall-mounted control and the second terminal of the wall-mounted control, wherein the first microcontroller unit controls the switching control module turns on/off a circuit between the first terminal of the wall-mounted control and the second terminal of the wall-mounted control according to the transmission data.

In the single live wire intelligent remote-control device and system according to a preferred embodiment of the present invention, the switching control module includes a first power transistor, a second power transistor and a power switch driver. The first power transistor includes a first source/drain terminal, a second source/drain terminal and a gate terminal, wherein the first source/drain terminal of the first power transistor is coupled to the first terminal of the wall-mounted control. The second power transistor includes a first source/drain terminal, a second source/drain terminal and a gate terminal, wherein the first source/drain terminal of the second power transistor is coupled to the second source/drain terminal of the first power transistor, and the second source/drain terminal of the second power transistor is coupled to the second terminal of the wall-mounted control. The power switch driver is coupled to the first microcontroller unit, the gate terminal of the first power transistor and the gate terminal of the second power transistor, for driving the first power transistor and the second power transistor according to the transmission data.

In the single live wire intelligent remote-control device and system according to a preferred embodiment of the present invention, the DC power converter further includes a bridge rectifier and a DC voltage supplier. The bridge rectifier includes a first input terminal, a second input terminal, a first output terminal and a second output terminal, wherein the first input terminal of the bridge rectifier is coupled to the live wire, the second input terminal of the bridge rectifier is coupled to the second terminal of the wall-mounted control. The DC voltage supplier includes a first input terminal, a second input terminal and an output terminal, wherein the first input terminal of the DC voltage supplier is coupled to the first output terminal of the bridge rectifier, the second input terminal of the DC voltage supplier is coupled to the second output terminal of the bridge rectifier and the output terminal of the DC voltage supplier is for providing the DC power voltage.

In the single live wire intelligent remote-control device and system according to a preferred embodiment of the present invention, the ceiling/wall device includes a bridge rectifier, a first zero-crossing detection circuit, a first microcontroller unit and a brushless DC motor circuit. The bridge rectifier includes a first input terminal, a second input terminal, a first output terminal and a second output terminal, wherein the first input terminal of the bridge rectifier is coupled to the second terminal of the power electrical wire, the second input terminal of the bridge rectifier is coupled to the neutral wire. The first zero-crossing detection circuit includes a first terminal and a second terminal, wherein the first terminal of the first zero-crossing detection circuit is coupled to the first output terminal of the bridge rectifier for detecting a voltage of the first output terminal of the bridge rectifier and outputting a first zero-crossing signal. The first microcontroller unit is coupled to the first zero-crossing detection circuit, recovering the transmission data according to the first zero-crossing signal to output a first control signal. The brushless DC motor circuit includes a first input terminal, a second input terminal and a control terminal, wherein the first input terminal of the brushless DC motor circuit is coupled to the first output terminal of the bridge rectifier, the second input terminal of the brushless DC motor circuit is coupled to the second output terminal of the bridge rectifier and the control terminal of the brushless DC motor circuit receives the first control signal from the first microcontroller unit to adjust the rotational speed of the brushless DC motor circuit.

In the single live wire intelligent remote-control device and system according to a preferred embodiment of the present invention, the ceiling/wall device further includes a second zero-crossing detection circuit, a second microcontroller unit and a lamp circuit. The second zero-crossing detection circuit includes a first terminal and a second terminal, wherein the first terminal of the zero-crossing detection circuit is coupled to the first output terminal of the bridge rectifier for detecting a voltage of the first output terminal of the bridge rectifier and outputting a second zero-crossing signal. The second microcontroller unit is coupled to the second zero-crossing detection circuit, recovering the transmission data according to the second zero-crossing signal to output a second control signal. The lamp circuit includes a first input terminal, a second input terminal and a control terminal, wherein the first input terminal of the lamp circuit is coupled to the first output terminal of the bridge rectifier, the second input terminal of the lamp circuit is coupled to the second output terminal of the bridge rectifier and the control terminal of the lamp circuit receives the second control signal from the second microcontroller unit to adjust a luminance and/or a color temperature of the lamp circuit.

In the single live wire intelligent remote-control device and system according to a preferred embodiment of the present invention, the ceiling/wall device is a ceiling fan with lights, wherein the transmission data further includes a rotational speed field, a rotation direction field, a lamp luminance field, a lamp color field and a spacer field. The rotational speed field includes a plurality of bit data. The rotation direction field includes one bit data. The lamp luminance field includes a plurality of bit data. The lamp color field includes a plurality of bit data. The spacer field includes at least a null data, wherein the null data corresponds to the null of the transmission data.

The invention further provides a single live wire intelligent remote-control method. The single live wire intelligent remote-control method include the steps of: providing a wall-mounted control, coupled between a live wire and a terminal of a power electrical wire installed in the wall, wherein the other terminal of the power electrical wire is coupled to a ceiling/wall device, wherein the ceiling/wall device is coupled to a neutral wire; controlling an off phase of an AC voltage conducted to the power electrical wire by the wall-mounted control according to a transmission data by user's option; detecting the off phase of the AC voltage on the power electrical wire by the ceiling/wall device to obtain the transmission data such that a setting of the ceiling/wall device is received, wherein a first off phase period of the voltage phase corresponds to a first logic of the transmission data and a second off phase period of the voltage phase corresponds to a second logic of the transmission data, and a third off phase period of the voltage phase corresponds to a null of the transmission data, wherein the ceiling/wall device determines whether the receives second AC voltage is the transmission data or not according to a receiving of null.

In the single live wire intelligent remote-control method according to a preferred embodiment of the present invention, controlling the off phase of an AC voltage conducted to the power electrical wire by the wall-mounted control according to the transmission data by user's option includes the steps of: converting user's option into a sequence of the transmission data; and transmitting a sequence of the off phase of an AC voltage to the power electrical wire.

In the single live wire intelligent remote-control method according to a preferred embodiment of the present invention, the sequence of the transmission data further includes a rotational speed field, a rotation direction field, a lamp luminance field, a lamp color field and a spacer field. The rotational speed field includes a plurality of bit data. The rotation direction field includes one bit data. The lamp luminance field includes a plurality of bit data. The lamp color field includes a plurality of bit data. The spacer field includes at least a null data, wherein the null data corresponds to the null of the transmission data.

The spirit of a preferred embodiment of the present invention lies in proposing an innovative control scheme, which achieves efficient centralized control of one or multiple devices by installing a wall-mounted remote-control device between the live wire and ceiling/wall devices. The wall-mounted control device translates user-operated commands on the control panel for ceiling/wall devices into a series of digitized transmission data. These data are encapsulated into specialized AC waveforms, which are then transmitted to various ceiling/wall devices through the existing power line. The transmission method is mapping the logic 1s and 0s of digital data to different phases of the AC voltage and inserting specific isolation intervals at the beginning and end of transmission, thereby forming informative AC waveforms. Thus, besides supplying power to the devices, digital data transmission is also achieved. With the adoption of digital serial transmission mode and utilizing only the existing power line without the need for additional clock lines, synchronization issues are naturally eliminated, greatly simplifying the control system. Moreover, this transmission mode enables a single wall-mounted control device to synchronize control over multiple ceiling/wall devices, realizing true one-to-many centralized control, meeting the control requirements of large venues, and enhancing energy efficiency and management convenience.

The above-mentioned and other objects, features and advantages of the present invention will become more apparent from the following detailed descriptions of preferred embodiments taken in conjunction with the accompanying drawings.

### BRIEF DESCRIPTION OF THE SEVERAL VIEWS OF THE DRAWINGS

FIG. 1 illustrates a circuit block diagram depicting a single live wire intelligent remote-control system according to a preferred embodiment of the present invention.
FIG. 2 illustrates a schematic diagram depicting a single live wire intelligent remote-control system according to a preferred embodiment of the present invention.
FIG. 3 illustrates a circuit block diagram depicting the wall-mounted control 101 of the single live wire intelligent remote-control system according to a preferred embodiment of the present invention.
FIG. 4 illustrates a circuit block diagram depicting the ceiling/wall device 11 of the single live wire intelligent remote-control system according to a preferred embodiment of the present invention.
FIG. 5 illustrates a circuit block diagram depicting the ceiling/wall device 11 of the single live wire intelligent remote-control system according to a preferred embodiment of the present invention.
FIG. 6 illustrates a waveform diagram depicting the operation waveforms of the single live wire intelligent remote-control system according to a preferred embodiment of the present invention.
FIG. 7 illustrates a modulation diagram depicting the transmission data modulation method of the single live wire intelligent remote-control system according to a preferred embodiment of the present invention.
FIG. 8 illustrates a flowchart depicting the single live wire intelligent remote-control method performing by the single live wire intelligent remote-control device 10 according to a preferred embodiment of the present invention.
FIG. 9 illustrates a flowchart depicting the single live wire intelligent remote-control method performing by ceiling/wall device 11 according to a preferred embodiment of the present invention.

### DETAILED DESCRIPTION OF THE INVENTION

The exemplary embodiments of the present invention, which are illustrated in the accompanying drawings, are provided. Wherever possible, the same reference numbers are used in the drawings and description to refer to the same or like parts. In addition, the practice of the exemplary embodiment is only one of the implementations of the design concept of the present invention, and thus, the present invention is not limit thereto.

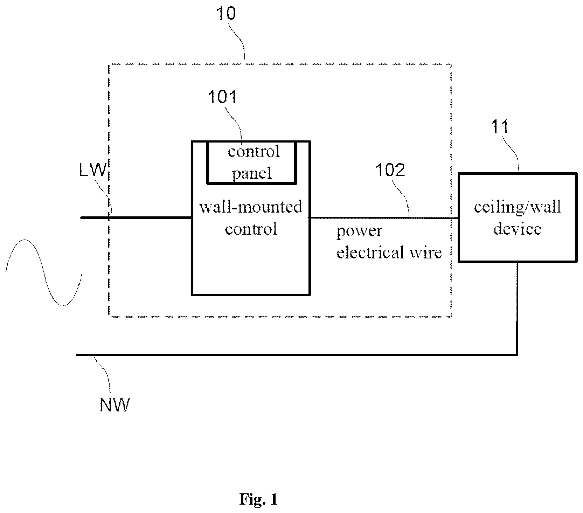

FIG. 1 illustrates a circuit block diagram depicting a single live wire intelligent remote-control system according to a preferred embodiment of the present invention. Referring to FIG. 1, the single live wire intelligent remote-control system includes a single live wire intelligent remote-control device 10 and at least a ceiling/wall device 11. The single live wire intelligent remote-control device 10 includes a wall-mounted control 101, and a power electrical wire 102. In order to facilitate those skilled in the art to understand the embodiments of the present invention, an additional live wire LW and an additional neutral wire NW is shown in FIG. 1. The live wire LW is for providing an AC voltage.

Generally, the wall-mounted control 101 is preferably fixed/ mounted on the wall and includes a control panel. Further, the wall-mounted control 101 includes a first terminal and a second terminal, wherein the first terminal of the wall-mounted control 101 is coupled to the live wire LW. The power electrical wire 102 is installed in wall. The power electrical wire 102 includes a first terminal and a second terminal, wherein the first terminal of the power electrical wire 102 is coupled to the second terminal of the wall-mounted control 101. The ceiling/wall device 11 might be a ceiling fan, a ceiling lamp, a wall lantern, a wall fan or a ceiling light fan. The ceiling/wall device 11 includes a first input terminal and a second input terminal, wherein the first input terminal of the ceiling/wall device 11 is coupled to the second terminal of the power electrical wire 102, the second input terminal of the ceiling/wall device 11 is coupled to a neutral wire NW.

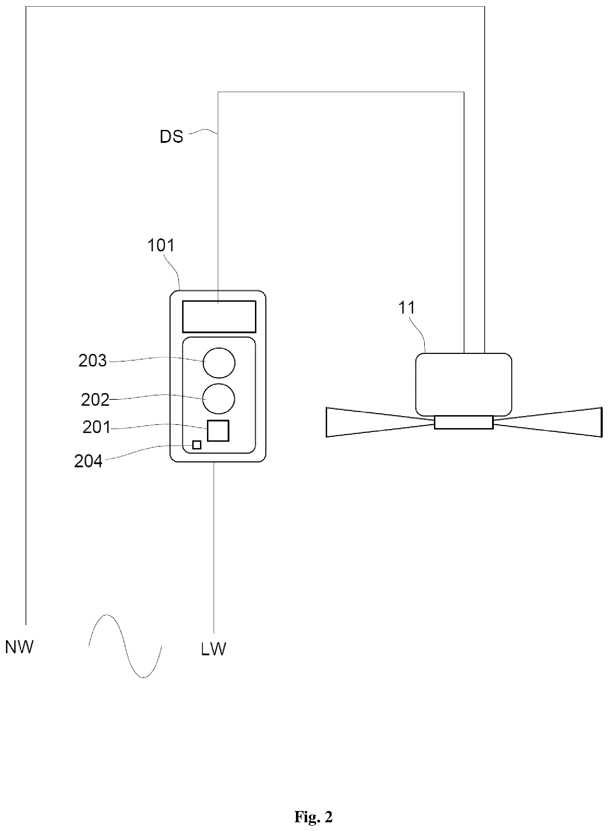

In this embodiment, the wall-mounted control 101 can be used to simultaneously control a plurality of ceiling/wall device 11 by a single power electrical wire 102. FIG. 2 illustrates a schematic diagram depicting a single live wire intelligent remote-control system according to a preferred embodiment of the present invention. Referring to FIG. 2, in this embodiment, the wall-mounted control 101 includes an on/off switch 201, a rotary fan speed control 202, a rotary lamp light control 203 and an IR receiver 204. In order to control the ceiling/wall device 11 by single wire, the power electrical wire 102 is not only to carry the AC power voltage but also to carry the control signal. The detailed technical description will be described later.

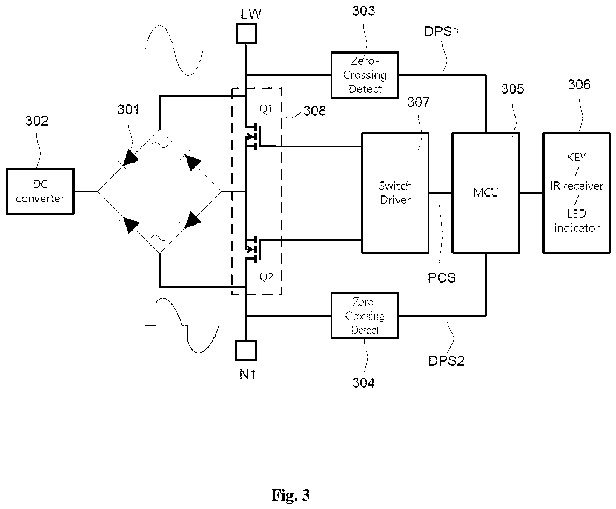

FIG. 3 illustrates a circuit block diagram depicting the wall-mounted control 101 of the single live wire intelligent remote-control system according to a preferred embodiment of the present invention. Referring to FIG. 3, the wall-mounted control 101 includes a full-bridge rectifier 301, a DC converter 302, a first zero-crossing detection circuit 303, a second zero-crossing detection circuit 304, a microcontroller 305, a control panel 306, a switch driver 307 and a bi-directional switch device 308. The bi-direction switch device 308 is implemented by a first metal oxide semiconductor field effect transistor (MOSFET) Q1 and a second MOSFET Q2. The two series reverse phase MOSFETs Q1 and Q2 are used for controlling the output phase of the AC voltage supplied to the ceiling/wall device 11.

The first zero-crossing detection circuit 303 and the second zero-crossing detection circuit 304 are respectively used to detect and synchronize the AC voltage and then respectively output the detected phase signals DPS1 and DPS2 to the microcontroller 305. The microcontroller 305 receives the settings from the user interface of the control panel 306 by user and converts the setting to a digital sequence of a transmission data. And then, the microcontroller 305 determines the output phase control signal PCS by the digital sequence of the transmission data. The switch driver 307 is for driving two reverse series MOSFETs Q1 and Q2 according to the phase control signals PCS. Thus, the MOSFETs Q1 and Q2 performs phase-cutting to the AC voltage supplied to the ceiling/wall device 11 by the on/off switch of the MOSFETs Q1 and Q2 according to the phase control signal PCS. In this embodiment, a switching control module is implemented by the switch driver 307 and the MOSFETs Q1 and Q2 for controlling the conduction state between the first terminal of the wall-mounted control 101 (live wire) and the second terminal of the wall-mounted control 101 according to the transmission data. Those skilled in the art can implement the switching control module by different circuit, such as silicon controlled rectifier (SCR), triode AC semiconductor switch (TRIAC), etc. Thus, the present invention is not limited thereto.

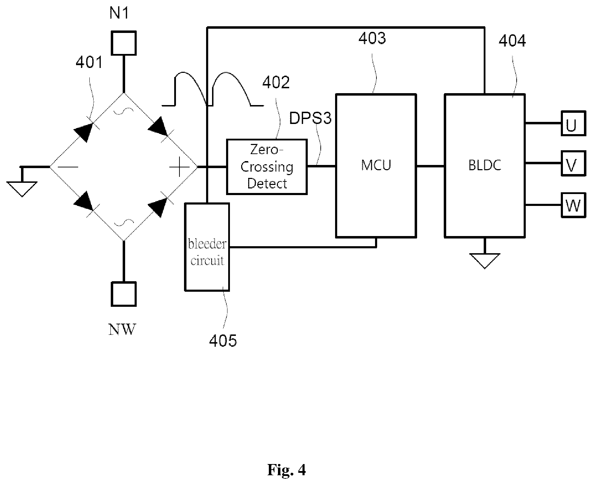

FIG. 4 illustrates a circuit block diagram depicting the ceiling/wall device 11 of the single live wire intelligent remote-control system according to a preferred embodiment of the present invention. Referring to FIG. 4, the ceiling/wall device 11 in this embodiment is, for example, a ceiling fan or wall fan. The ceiling/wall device 11 includes a full-bridge rectifier 401, a zero-crossing detection circuit 402, a microcontroller 403, a brushless DC motor circuit 404 and a bleeder circuit 405. The first input terminal of the full-bridge rectifier 401 of the ceiling/wall device 11 is serially coupled to the node N1 of the wall-mounted control 101 to receive the phase cutting AC voltage. The second input terminal of the full-bridge rectifier 401 of the ceiling/wall device 11 is coupled to the neutral wire NW. The zero-crossing detection circuit 402 detects the voltage of the positive output terminal of the full-bridge rectifier 401 to output a detected phase signal DPS3. The microcontroller 403 receives the detected phase signal DPS3, and demodulates the detected phase signal DPS3 from the zero-crossing detection circuit 402 to obtain the digital sequence of the transmission data which may content the speed and direction information. Thus, the microcontroller 403 controls the rotation speed and/or the rotation direction of the brushless DC motor circuit 404 to drive U, V, W three wires of the brushless motor according to the transmission data.

The bleeder circuit 405 in this embodiment, which is coupled behind the full-bridge rectifier 401, is used to continuously provide enough working current for the wall-mounted control 101. In order to reduce unnecessary bleeder current, the bleeder circuit 405 can be implemented by a constant current circuit and a switch (not shown in FIG. 4) of which the conduction period is controlled by the microcontroller 403. However, people having ordinary skill in the art should know that the designer can change the supplied power method to the wall-mounted control 101. The present invention is not limited thereto.

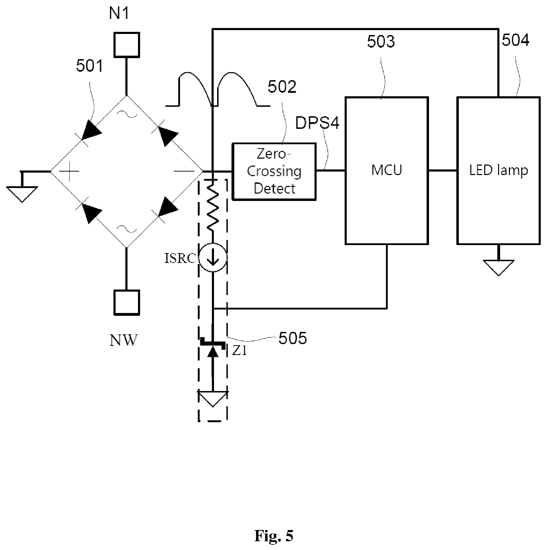

FIG. 5 illustrates a circuit block diagram depicting the ceiling/wall device 11 of the single live wire intelligent remote-control system according to a preferred embodiment of the present invention. Referring to FIG. 5, the ceiling/wall device 11 in this embodiment is, for example, a ceiling lamp or wall lamp. The ceiling/wall device 11 includes a full-bridge rectifier 501, a zero-crossing detection circuit 502, a microcontroller 503, an LED lamp circuit 504 and a DC power supply circuit 505. Similar to the ceiling fan in FIG. 4, the LED lamp circuit in this preferred embodiment of the present invention obtains the control command from the transmission data demodulated in the AC voltage provided by the wall-mounted control 101 to achieve controlling, for example, the brightness and color temperature at the same time.

Due to the limitation of space and height of the LED control circuit, the preferred embodiment of the present invention adopts a circuit implemented by a continuously working constant current source ISRC and a 5v Zener Z1 to achieve the bleeder circuit as the DC power supply circuit 505 to the microcontroller 503 of the ceiling LED lamp circuit, to rectify a 5v DC voltage to supply the microcontroller 503. Moreover, the zero-crossing detection circuit 502 is coupled to the full-bridge rectifier 501 in series to obtain the full-wave AC voltage, and acquires the detected phase signal DPS3 to the microcontroller 503 such that the microcontroller 503 can demodulate the digital sequence of the transmission data to acquire the control command. The LED lamp circuit 504 in this embodiment is implemented by, for example, two constant current drivers which controls two LEDs with different color temperatures. The microcontroller 503 can respectively adjust the duty cycle of the PWM to control the current of the corresponding LEDs such that the color temperature and brightness control can be achieved. In the abovementioned embodiment, if the ceiling/wall devices 11 in FIG. 4 and FIG. 5 are the same device, for example, a ceiling light fan, the full-bridge rectifier 401 and full-bridge rectifier 501 may be the same full-bridge rectifier, and the zero-crossing detection circuit 502 and the zero-crossing detection circuit 402 also may be the same zero-crossing detection circuit. Further the microcontroller 503 and the microcontroller 403 also may be the same microcontroller. Thus, the present invention is not limited thereto.

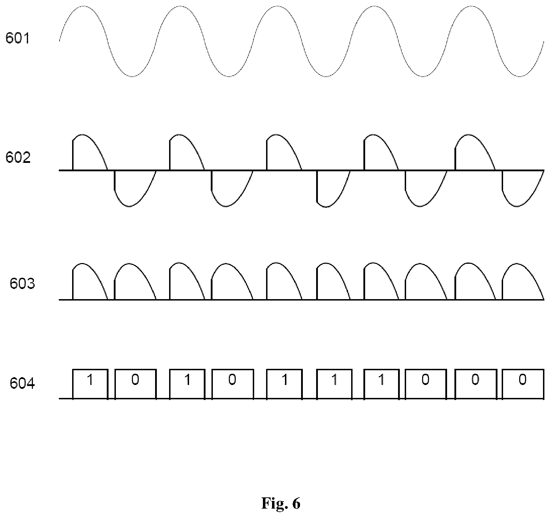

FIG. 6 illustrates a waveform diagram depicting the operation waveforms of the single live wire intelligent remote-control system according to a preferred embodiment of the present invention. Referring to FIG. 6, the label 601 illustrates the AC voltage waveform of the live wire; the label 602 illustrates the waveform of node N1 in a preferred embodiment of the present invention; the label 603 illustrates the input voltage waveform of the zero-crossing detection circuit 502 or 402 in a preferred embodiment of the present invention; and the label 604 illustrates the waveform of the detected phase signal of the zero-crossing detection circuit 502 or 402 in a preferred embodiment of the present invention. In the preferred embodiment of the present invention, the different phase-cutting corresponds to the different logic data. In this embodiment, the duty cycle of the detected phase signal 604 shows the phase-cutting of the AC voltage. For example, the logic "1" corresponds the smaller duty cycle of the detected phase signal 604, and the logic "0" corresponds the greater duty cycle of the detected phase signal 604.

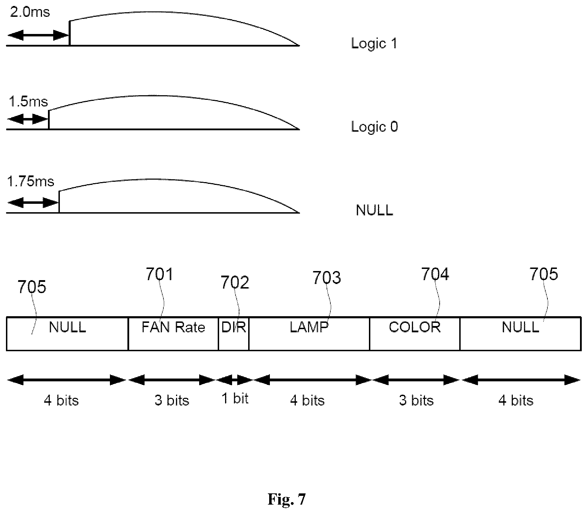

FIG. 7 illustrates a modulation diagram depicting the transmission data modulation method of the single live wire intelligent remote-control system according to a preferred embodiment of the present invention. Referring to FIG. 7, the logic "1" is modulated by cutting 2ms phase period of AC voltage, the logic "0" is modulated by cutting 1.5ms phase period of AC voltage, the Null or spacer is modulated by cutting 1.75ms phase period of AC voltage. Further, the sequence of the transmission data further includes a rotational speed field 701, a rotation direction field 702, a lamp luminance field 703, a lamp color field 704 and a spacer field 705. The rotational speed field includes 4 bits data; the rotation direction field includes one bit data; a lamp luminance field includes 4 bits data; the lamp color field includes 3 bits data; and the spacer field includes 4bit null data. The wall-mounted control 101 will turn off different duties to generate a sequence of control commands, where "0" is 1.5ms, "1" is 2.0mS, and the NULL bit is 1.75 mS in this embodiment. The ceiling/wall device 11 in this embodiment receives NULL bit, it can determine the following AC voltage contents the control commands as above, and then start to perform demodulation of the transmission data.

In order to facilitate those skilled in the art to understand the spirit of the present invention, the abovementioned modulation/coding method is provided as an exemplary embodiment. Those skilled in the art may changes the timing, such as 1.5ms to 1ms, and/or bit counts, Null bit, word interval even the whole protocol according to the preferred embodiment of the present invention. Thus, the present invention is not limited thereto. Furthermore, although only one LED lamp and one ceiling fan are provided in the abovementioned embodiment, those skilled in the art should know that the abovementioned embodiments adopt digital control in AC live wire such that a plurality of lamps and/or ceiling fans can be controlled by one wall-mounted control 101. Thus, the present invention is also not limited thereto.

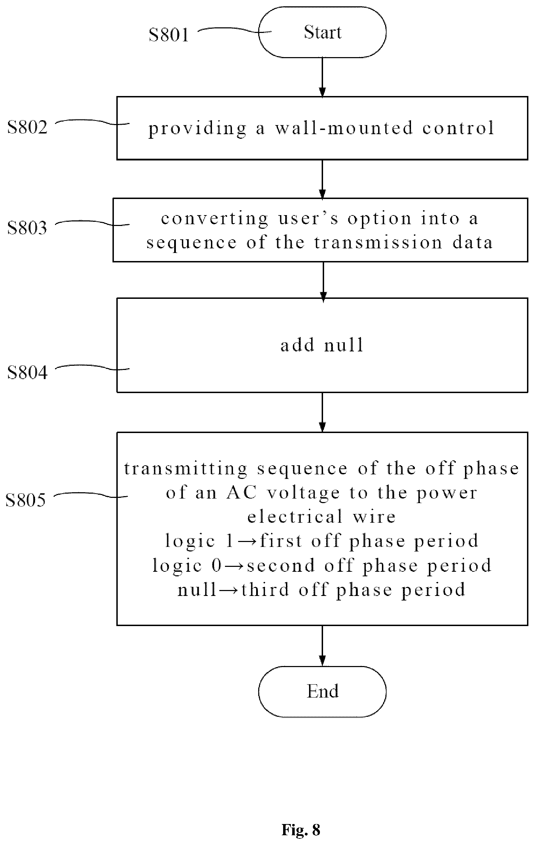

FIG. 8 illustrates a flowchart depicting the single live wire intelligent remote-control method performing by the single live wire intelligent remote-control device 10 according to a preferred embodiment of the present invention. Referring to FIG. 8, the single live wire intelligent remote-control method performing by the single live wire intelligent remote-control device 10 includes the steps of:

In step S801, the method starts.

In step S802, a wall-mounted control is provided. As the embodiment above, the wall-mounted control is coupled between a live wire and a terminal of a power electrical wire installed in the wall. The other terminal of the power electrical wire is coupled to a first input terminal of the ceiling/wall device, wherein a second input terminal of the ceiling/wall device coupled to a neutral wire.

In step S803, user's option is converted into a sequence of the transmission data, such as the data package without the spacer field shown in FIG. 7.

In step S804, the transmission data is packed with null or spacer.

In step S805, a sequence of the off phase of an AC voltage is transmitted to the power electrical wire. As shown in FIG.7, a first logic (such as logic "1") of the transmission data corresponds to a first off phase period of the voltage phase (such as 2.0ms) and a second logic (such as logic "0") of the transmission data corresponds to a second off phase period of the voltage phase (such as 1.5ms), and a null of the transmission data corresponds to a third off phase period of the voltage phase (such as 1.75ms).

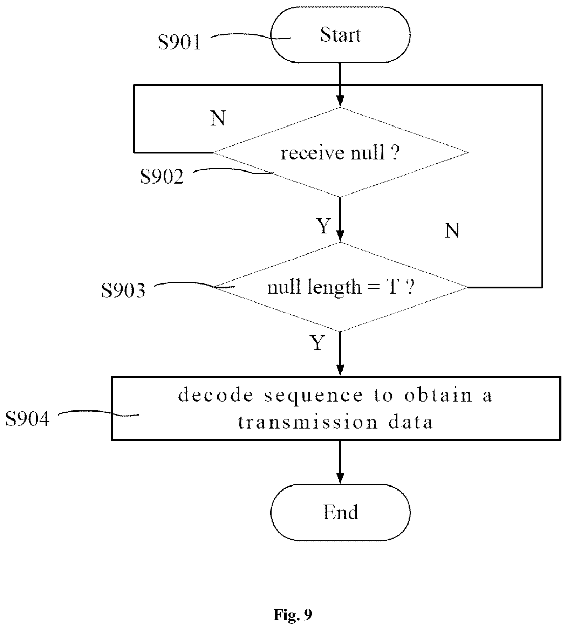

FIG. 9 illustrates a flowchart depicting the single live wire intelligent remote-control method performing by ceiling/wall device 11 according to a preferred embodiment of the present invention. Referring to FIG. 8, the single live wire intelligent remote-control method performing by ceiling/wall device 11 includes the steps of:

In step S901, the method starts.

In step S902, it is determined whether a null is received. If the determination is negative, come back to step S902. If the determination is positive, go to step S903.

In step S903, it is determined whether a null length is equal to a threshold T. If the determination is negative, come back to step S902. If the determination is positive, go to step S904.

In step S904, the off phase of the AC voltage on the power electrical wire by the ceiling/wall device is detected to decode the transmission data such that a setting of the ceiling/wall device is received.

The circuit block diagrams in FIG. 3 to FIG. 5 are merely illustrative examples. Those skilled in the art can partially or entirely modify the circuits based on the spirit of the aforementioned embodiments of the present invention. For example, the aforementioned switch driver and the two MOSFETs can be replaced with other switches. As another example, if the ceiling/wall device 11 in FIG. 5 is changed to a gas discharge light source, the LED lamp circuit 504 would become an electronic ballast circuit. Therefore, the present invention is not limited to the above-mentioned circuits.

In summary, the spirit of the preferred embodiment of the present invention lies in proposing an innovative control scheme, which achieves efficient centralized control of one or multiple devices by installing a wall-mounted remote-control device between the live wire and ceiling/wall devices. The wall-mounted control device translates user-operated commands on the control panel for ceiling/wall devices into a series of digitized transmission data. These data are encapsulated into specialized AC waveforms, which are then transmitted to various ceiling/wall devices through the existing power line. The transmission method is mapping the logic 1s and Os of digital data to different phases of the AC voltage and inserting specific isolation intervals at the beginning and end of transmission, thereby forming informative AC waveforms. Thus, besides supplying power to the devices, digital data transmission is also achieved. With the adoption of digital serial transmission mode and utilizing only the existing power line without the need for additional clock lines, synchronization issues are naturally eliminated, greatly simplifying the control system. Moreover, this transmission mode enables a single wall-mounted control device to synchronize control over multiple ceiling/wall devices, realizing true one-to-many centralized control, meeting the control requirements of large venues, and enhancing energy efficiency and management convenience.

While the present invention has been described by way of examples and in terms of preferred embodiments, it is to be understood that the present invention is not limited thereto. To the contrary, it is intended to cover various modifications. Therefore, the scope of the appended claims should be accorded the broadest interpretation so as to encompass all such modifications.

## Claims

1. A single live wire intelligent remote-control device, for controlling at least a ceiling/wall device, comprising a first input terminal and a second input terminal, wherein the second input terminal of the ceiling/wall device is coupled to a neutral wire, wherein the single live wire intelligent remote-control device comprises:
a wall-mounted control, wherein a control panel of the wall-mounted control mounted on a wall, comprising a first terminal and a second terminal, wherein the first terminal of the wall-mounted control is coupled to a live wire to receive an AC voltage; and
a power electrical wire, comprising a first terminal and a second terminal, wherein the first terminal of the power electrical wire is coupled to the second terminal of the wall-mounted control, the second terminal of the power electrical wire is coupled to the first input terminal of the ceiling/wall device, wherein the power electrical wire is installed in the wall;
wherein the wall-mounted control detects the AC voltage and controls a voltage phase of a second AC voltage provided to the power electrical wire according to a transmission data by user control on the control panel, wherein a first off phase period of the voltage phase corresponds to a first logic of the transmission data and a second off phase period of the voltage phase corresponds to a second logic of the transmission data, and a third off phase period of the voltage phase corresponds to a null of the transmission data,
wherein the ceiling/wall device determines whether the received second AC voltage is the transmission data or not according to a receiving of null.

2. The single live wire intelligent remote-control device according to claim 1, wherein the wall-mounted control comprising:
a DC power converter, coupled between the first terminal of the wall-mounted control and the second terminal of the wall-mounted control, for providing a DC power voltage;
a first zero-crossing detection circuit, comprising a first terminal and a second terminal, wherein the first terminal of the first zero-crossing detection circuit is coupled to the first terminal of the wall-mounted control for detecting the AC voltage and outputting a first zero-crossing signal;
a second zero-crossing detection circuit, comprising a first terminal and a second terminal, wherein the first terminal of the second zero-crossing detection circuit is coupled to the second terminal of the wall-mounted control for detecting the second AC voltage and outputting a second zero-crossing signal;
a first microcontroller unit, coupled to the DC power converter, the first zero-crossing detection circuit, the second zero-crossing detection circuit and the control panel, generating the transmission data according to an operation of the control panel by user; and
a switching control module, coupled to the first microcontroller unit, the first terminal of the wall-mounted control and the second terminal of the wall-mounted control, wherein the first microcontroller unit controls the switching control module turns on/off a circuit between the first terminal of the wall-mounted control and the second terminal of the wall-mounted control according to the transmission data.

3. The single live wire intelligent remote-control device according to claim 2, wherein the switching control module comprising:
a first power transistor, comprising a first source/drain terminal, a second source/drain terminal and a gate terminal, wherein the first source/drain terminal of the first power transistor is coupled to the first terminal of the wall-mounted control;
a second power transistor, comprising a first source/drain terminal, a second source/drain terminal and a gate terminal, wherein the first source/drain terminal of the second power transistor is coupled to the second source/drain terminal of the first power transistor, and the second source/drain terminal of the second power transistor is coupled to the second terminal of the wall-mounted control; and
a power switch driver, coupled to the first microcontroller unit, the gate terminal of the first power transistor and the gate terminal of the second power transistor, for driving the first power transistor and the second power transistor according to the transmission data.

4. The single live wire intelligent remote-control device according to claim 2, wherein the DC power converter further comprising:
a bridge rectifier, comprising a first input terminal, a second input terminal, a first output terminal and a second output terminal, wherein the first input terminal of the bridge rectifier is coupled to the live wire, the second input terminal of the bridge rectifier is coupled to the second terminal of the wall-mounted control; and
a DC voltage supplier, comprising a first input terminal, a second input terminal and an output terminal, wherein the first input terminal of the DC voltage supplier is coupled to the first output terminal of the bridge rectifier, the second input terminal of the DC voltage supplier is coupled to the second output terminal of the bridge rectifier and the output terminal of the DC voltage supplier is for providing the DC power voltage.

5. The single live wire intelligent remote-control device according to claim 1, wherein the ceiling/wall device comprising:
a bridge rectifier, comprising a first input terminal, a second input terminal, a first output terminal and a second output terminal, wherein the first input terminal of the bridge rectifier is coupled to the second terminal of the power electrical wire, the second input terminal of the bridge rectifier is coupled to the neutral wire;
a first zero-crossing detection circuit, comprising a first terminal and a second terminal, wherein the first terminal of the first zero-crossing detection circuit is coupled to the first output terminal of the bridge rectifier for detecting a voltage of the first output terminal of the bridge rectifier and outputting a first zero-crossing signal;
a first microcontroller unit, coupled to the first zero-crossing detection circuit, recovering the transmission data according to the first zero-crossing signal to output a first control signal; and
a brushless DC motor circuit, comprising a first input terminal, a second input terminal and a control terminal, wherein the first input terminal of the brushless DC motor circuit is coupled to the first output terminal of the bridge rectifier, the second input terminal of the brushless DC motor circuit is coupled to the second output terminal of the bridge rectifier and the control terminal of the brushless DC motor circuit receives the first control signal from the first microcontroller unit to adjust the rotational speed of the brushless DC motor circuit.

6. The single live wire intelligent remote-control device according to claim 5, wherein the ceiling/wall device further comprising:
a second zero-crossing detection circuit, comprising a first terminal and a second terminal, wherein the first terminal of the zero-crossing detection circuit is coupled to the first output terminal of the bridge rectifier for detecting a voltage of the first output terminal of the bridge rectifier and outputting a second zero-crossing signal;
a second microcontroller unit, coupled to the second zero-crossing detection circuit, recovering the transmission data according to the second zero-crossing signal to output a second control signal; and
a lamp circuit, comprising a first input terminal, a second input terminal and a control terminal, wherein the first input terminal of the lamp circuit is coupled to the first output terminal of the bridge rectifier, the second input terminal of the lamp circuit is coupled to the second output terminal of the bridge rectifier and the control terminal of the lamp circuit receives the second control signal from the second microcontroller unit to adjust a luminance and/or a color temperature of the lamp circuit.

7. The single live wire intelligent remote-control device according to claim 1, wherein the ceiling/wall device is a ceiling fan with lights, wherein the transmission data further comprising:
a rotational speed field, comprising a plurality of bit data;
a rotation direction field, comprising one bit data;
a lamp luminance field, comprising a plurality of bit data;
a lamp color field, comprising a plurality of bit data; and
a spacer field, comprising at least a null data,
wherein the null data corresponds to the null of the transmission data.

8. A single live wire intelligent remote-control system, comprises:
a single live wire intelligent remote-control device, comprising:
a wall-mounted control, wherein a control panel of the wall-mounted control mounted on a wall, comprising a first terminal and a second terminal, wherein the first terminal of the wall-mounted control is coupled to a live wire to receive an AC voltage; and
a power electrical wire, comprising a first terminal and a second terminal, wherein the first terminal of the power electrical wire is coupled to the second terminal of the wall-mounted control, wherein the power electrical wire is installed in the wall; and
at least a ceiling/wall device, comprising a first input terminal and a second input terminal, wherein the first input terminal of the ceiling/wall device is coupled to the second terminal of the power electrical wire, and the second input terminal of the ceiling/wall device is coupled to a neutral wire, wherein the single live wire intelligent remote-control device,
wherein the wall-mounted control detects the AC voltage and controls a voltage phase of a second AC voltage provided to the power electrical wire according to a transmission data by user control on the control panel, wherein a first off phase period of the voltage phase corresponds to a first logic of the transmission data and a second off phase period of the voltage phase corresponds to a second logic of the transmission data, and a third off phase period of the voltage phase corresponds to a null of the transmission data,
wherein the ceiling/wall device determines whether the received AC voltage is the transmission data or not according to a receiving of null.

9. The single live wire intelligent remote-control system according to claim 8, wherein the wall-mounted control comprising:
a DC power converter, coupled between the first terminal of the wall-mounted control and the second terminal of the wall-mounted control, for providing a DC power voltage;
a first zero-crossing detection circuit, comprising a first terminal and a second terminal, wherein the first terminal of the first zero-crossing detection circuit is coupled to the first terminal of the wall-mounted control for detecting the AC voltage and outputting a first zero-crossing signal;
a second zero-crossing detection circuit, comprising a first terminal and a second terminal, wherein the first terminal of the second zero-crossing detection circuit is coupled to the second terminal of the wall-mounted control for detecting a second AC voltage and outputting a second zero-crossing signal;
a first microcontroller unit, coupled to the DC power converter, the first zero-crossing detection circuit, the second zero-crossing detection circuit and the control panel, generating the transmission data according to an operation of the control panel by user; and
a switching control module, coupled to the first microcontroller unit, the first terminal of the wall-mounted control and the second terminal of the wall-mounted control, wherein the first microcontroller unit controls the switching control module turns on/off a circuit between the first terminal of the wall-mounted control and the second terminal of the wall-mounted control according to the transmission data.

10. The single live wire intelligent remote-control system according to claim 9, wherein the switching control module comprising:
a first power transistor, comprising a first source/drain terminal, a second source/drain terminal and a gate terminal, wherein the first source/drain terminal of the first power transistor is coupled to the first terminal of the wall-mounted control;
a second power transistor, comprising a first source/drain terminal, a second source/drain terminal and a gate terminal, wherein the first source/drain terminal of the second power transistor is coupled to the second source/drain terminal of the first power transistor, and the second source/drain terminal of the second power transistor is coupled to the second terminal of the wall-mounted control; and
a power switch driver, coupled to the first microcontroller unit, the gate terminal of the first power transistor and the gate terminal of the second power transistor, for driving the first power transistor and the second power transistor according to the transmission data.

11. The single live wire intelligent remote-control system according to claim 9, wherein the DC power converter further comprising:
a bridge rectifier, comprising a first input terminal, a second input terminal, a first output terminal and a second output terminal, wherein the first input terminal of the bridge rectifier is coupled to the live wire, the second input terminal of the bridge rectifier is coupled to the second terminal of the wall-mounted control; and
a DC voltage supplier, comprising a first input terminal, a second input terminal and an output terminal, wherein the first input terminal of the DC voltage supplier is coupled to the first output terminal of the bridge rectifier, the second input terminal of the DC voltage supplier is coupled to the second output terminal of the bridge rectifier and the output terminal of the DC voltage supplier is for providing the DC power voltage.

12. The single live wire intelligent remote-control device according to claim 8, wherein the ceiling/wall device comprising:
a bridge rectifier, comprising a first input terminal, a second input terminal, a first output terminal and a second output terminal, wherein the first input terminal of the bridge rectifier is coupled to the second terminal of the power electrical wire, the second input terminal of the bridge rectifier is coupled to the neutral wire;
a first zero-crossing detection circuit, comprising a first terminal and a second terminal, wherein the first terminal of the first zero-crossing detection circuit is coupled to the first output terminal of the bridge rectifier for detecting a voltage of the first output terminal of the bridge rectifier and outputting a first zero-crossing signal;
a first microcontroller unit, coupled to the first zero-crossing detection circuit, recovering the transmission data according to the first zero-crossing signal to output a first control signal; and
a brushless DC motor circuit, comprising a first input terminal, a second input terminal and a control terminal, wherein the first input terminal of the brushless DC motor circuit is coupled to the first output terminal of the bridge rectifier, the second input terminal of the brushless DC motor circuit is coupled to the second output terminal of the bridge rectifier and the control terminal of the brushless DC motor circuit receives the first control signal from the first microcontroller unit to adjust the rotational speed of the brushless DC motor circuit.

13. The single live wire intelligent remote-control system according to claim 12, wherein the ceiling/wall device further comprising:
a second zero-crossing detection circuit, comprising a first terminal and a second terminal, wherein the first terminal of the zero-crossing detection circuit is coupled to the first output terminal of the bridge rectifier for detecting a voltage of the first output terminal of the bridge rectifier and outputting a second zero-crossing signal;
a second microcontroller unit, coupled to the second zero-crossing detection circuit, recovering the transmission data according to the second zero-crossing signal to output a second control signal; and
a lamp circuit, comprising a first input terminal, a second input terminal and a control terminal, wherein the first input terminal of the lamp circuit is coupled to the first output terminal of the bridge rectifier, the second input terminal of the lamp circuit is coupled to the second output terminal of the bridge rectifier and the control terminal of the lamp circuit receives the second control signal from the second microcontroller unit to adjust a luminance and/or a color temperature of the lamp circuit.

14. The single live wire intelligent remote-control system according to claim 8, wherein the ceiling/wall device is a ceiling fan with lights, wherein the transmission data further comprising:
a rotational speed field, comprising a plurality of bit data;
a rotation direction field, comprising one bit data;
a lamp luminance field, comprising a plurality of bit data;
a lamp color field, comprising a plurality of bit data; and
a spacer field, comprising at least a null data,
wherein the null data corresponds to the null of the transmission data.

15. A single live wire intelligent remote-control method, for controlling at least a ceiling/wall device, wherein the single live wire intelligent remote-control method comprises:
providing a wall-mounted control, coupled between a live wire and a terminal of a power electrical wire installed in the wall, wherein the other terminal of the power electrical wire is coupled to a first input terminal of the ceiling/wall device, wherein a second input terminal of the ceiling/wall device coupled to a neutral wire;
controlling an off phase of an AC voltage conducted to the power electrical wire by the wall-mounted control according to a transmission data by user's option;
detecting the off phase of the AC voltage on the power electrical wire by the ceiling/wall device to obtain the transmission data such that a setting of the ceiling/wall device is received,
wherein a first off phase period of the voltage phase corresponds to a first logic of the transmission data and a second off phase period of the voltage phase corresponds to a second logic of the transmission data, and a third off phase period of the voltage phase corresponds to a null of the transmission data,
wherein the ceiling/wall device determines whether the received AC voltage is the transmission data or not according to a receiving of null.

16. The single live wire intelligent remote-control method according to claim 15, wherein controlling the off phase of an AC voltage conducted to the power electrical wire by the wall-mounted control according to the transmission data by user's option comprising:
converting user's option into a sequence of the transmission data; and
transmitting a sequence of the off phase of an AC voltage to the power electrical wire.

17. The single live wire intelligent remote-control method according to claim 16, wherein the sequence of the transmission data further comprising:
a rotational speed field, comprising a plurality of bit data;
a rotation direction field, comprising one bit data;
a lamp luminance field, comprising a plurality of bit data;
a lamp color field, comprising a plurality of bit data; and
a spacer field, comprising at least a null data,
wherein the null data corresponds to the null of the transmission data.
